(19) **Europäisches Patentamt / European Patent Office / Office européen des brevets**

(11) **EP 2 363 940 B1**

(12) **FASCICULE DE BREVET EUROPEEN**

(45) Date de publication et mention de la délivrance du brevet:
**05.01.2022 Bulletin 2022/01**

(51) Int Cl.:
*H02J 9/06* *(2006.01)*   *G06F 1/30* *(2006.01)*
*H02J 1/10* *(2006.01)*   *G06F 1/26* *(2006.01)*

(21) Numéro de dépôt: **11305222.9**

(22) Date de dépôt: **01.03.2011**

(54) **Système et procédé d'alimentation en courant continu d'un système électrique**

Gleichstromversorgung eines elektrischen Systems und Verfahren dazu

DC power supply of an electric system and process

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2010 FR 1051511**

(43) Date de publication de la demande:
**07.09.2011 Bulletin 2011/36**

(73) Titulaire: **Bull S.A.S.**
**78340 Les Clayes-sous-Bois (FR)**

(72) Inventeur: **Lecourtier, Georges**
**78000, Versailles (FR)**

(74) Mandataire: **Argyma**
**14 Boulevard de Strasbourg**
**31000 Toulouse (FR)**

(56) Documents cités:
EP-A2- 0 402 833     DE-A1- 3 704 426
DE-A1- 10 244 608    US-A- 5 184 025
US-A1- 2001 022 472  US-A1- 2006 192 433
US-A1- 2007 152 506  US-A1- 2007 200 432
US-A1- 2010 009 724

**Description**

La présente invention concerne un système d'alimentation en courant continu d'un système électrique. Elle concerne également un procédé mis en oeuvre par ce système.

Plus précisément, l'invention concerne un système d'alimentation comportant au moins deux dispositifs d'alimentation en courant continu comprenant chacun des moyens de raccordement électrique à une source d'alimentation en courant alternatif et un convertisseur AC/DC de courant alternatif en courant continu.

Par exemple, elle s'applique à un système de traitement d'information, comportant au moins un calculateur devant être alimenté en très basse tension. L'alimentation en courant continu d'un tel système de traitement d'information est généralement destinée à être raccordée à au moins un réseau d'alimentation en courant alternatif par l'intermédiaire d'un tel système d'alimentation dont les dispositifs d'alimentation délivrent un courant à très basse tension.

On entend par « très basse tension », une tension généralement qualifiée de « tension de sécurité » qui permet à un opérateur de manipuler sans danger tout composant électrique sous cette tension. Une telle tension est en outre généralement adaptée aux composants électroniques d'un système de traitement d'information. Plusieurs domaines sont définis légalement en France et en Europe (TBT, TBTS, TBTP, TBTF) mais placent tous les très basses tensions sous le seuil de 120 V en courant continu et sous le seuil de 50 V en courant alternatif.

La tension d'un courant alternatif distribué par un réseau de distribution d'électricité est en général de l'ordre de 220/230 V ce qui représente donc a priori un danger pour un opérateur. En revanche, il est généralement considéré qu'une tension de 50 V ou moins ne représente pas de danger à la manipulation. Ainsi, dans les applications de télécommunication, les systèmes de traitement des données de transmission sont généralement soumis à une tension d'environ 48 V. En aviation, les composants embarqués sont généralement soumis à une tension continue d'environ 28 V. Enfin, un système de traitement d'information de type calculateur est généralement soumis à une tension continue d'environ 12 V.

Un système de traitement d'information est par exemple un ensemble de serveurs informatiques interconnectés en réseau local, formant ainsi un calculateur à haute performance, généralement qualifié de calculateur HPC (de l'Anglais « High Performance Computing »). Dans ce cas comme dans d'autres applications sensibles (serveur informatique, micro-ordinateur fixe ou portable, station radiofréquence de télécommunication, etc.), il est important que le fonctionnement du système électrique ne soit pas perturbé par des défaillances dans l'alimentation en courant, que ce soit des micro-coupures du réseau d'alimentation en courant alternatif ou des défaillances des dispositifs d'alimentation en courant continu eux-mêmes. En effet, de telles défaillances, même lorsqu'elles ne durent que quelques centaines de millisecondes, peuvent engendrer des erreurs de calcul, des pertes de données ou des dysfonctionnements très pénalisants du calculateur HPC.

A titre d'exemple, les micro-coupures sont assez fréquentes, le gestionnaire du réseau d'alimentation en courant alternatif pouvant avoir besoin ponctuellement de délester des parties du réseau. Elles ont en général une durée équivalente à quelques périodes du courant alternatif : pour un courant alternatif de 50 Hertz, une micro-coupure de dix à douze périodes dure ainsi entre 200 et 250 millisecondes. En outre, le redémarrage d'un dispositif d'alimentation en courant continu suite à une micro-coupure peut prendre lui aussi 100 à 200 millisecondes, ce qui donne une micro-coupure, vue du système électrique, pouvant durer jusqu'à 450 millisecondes.

Lorsqu'un système électrique, notamment de type calculateur HPC, est alimenté par plusieurs dispositifs d'alimentation en courant continu, il est bien connu de choisir chacun de ces dispositifs pour qu'il soit capable de fournir seul l'intégralité du courant consommé par le système électrique tout en prévoyant un montage analogique d'équilibrage des alimentations qui assure à chaque instant que les dispositifs d'alimentation fournissent tous du courant en quantité sensiblement égale tant qu'ils fonctionnent tous. Une mesure de précaution supplémentaire consiste à prévoir une source d'alimentation en courant alternatif différente pour chaque dispositif d'alimentation.

Ainsi, en cas de défaillance de l'un des dispositifs d'alimentation en courant continu, soit à cause d'une défaillance de sa source d'alimentation en courant alternatif soit à cause d'une défaillance propre, le ou les autres dispositifs peuvent prendre le relais sans risquer d'atteindre leur saturation en alimentation. Cependant, cette solution n'est pas optimale en termes de consommation écologique des ressources électriques puisqu'en fonctionnement normal des dispositifs d'alimentation, chacun de ceux-ci fonctionne alors à moins de 50% de sa capacité maximale et loin de son rendement optimal. Or les normes qui se développent aujourd'hui sont de plus en plus exigeantes sur une consommation écologique des ressources et imposent que la puissance effectivement développée par les dispositifs d'alimentation en courant continu soient mieux ajustée aux systèmes électriques qu'ils alimentent pour améliorer les rendements.

Une solution, appelée « Cold Redundancy Technology », a été introduite récemment dans le cadre du forum IDF2009 (pour « Intel Developer Forum 2009 ») qui s'est tenu du 22 au 24 septembre 2009 à San Francisco (USA). Cette solution consiste par exemple, lorsque l'alimentation en courant continu comporte deux dispositifs d'alimentation, à n'en solliciter qu'un à un niveau de rendement optimal et à ne démarrer l'autre que lorsque le système électrique à alimenter passe à un niveau de consommation supérieur à un seuil prédéterminé ou lorsqu'une défaillance survient dans le dispositif d'alimentation actif. Mais il n'est pas indiqué comment la transition est gérée en cas de défaillance.

En effet, chaque dispositif d'alimentation en courant continu comporte un condensateur ou ensemble de condensateurs, dit bloc condensateur « holdup », capable a priori de résister pendant plusieurs dizaines de millisecondes, par exemple environ 20 ms, à une coupure secteur. Mais les défaillances (notamment les coupures secteur) d'un dispositif d'alimentation atteignent souvent plusieurs centaines de millisecondes et une transition d'un dispositif à un autre aussi. Le bloc condensateur « holdup » ne permet donc pas d'assurer une transition sans risque d'endommagement du système électrique alimenté.

Par ailleurs, cette solution s'apparente aux systèmes de double alimentation à transfert d'alimentation par commutation automatique, à l'aide d'un module de gestion de la commutation, tels qu'ils peuvent être proposés par des sociétés comme Schneider Electric. Mais ces systèmes, généralement proposés pour des installations vitales telles qu'un parc d'appareils médicaux d'un hôpital, ne sont pas adaptés pour des installations plus sensibles aux coupures telles que des serveurs ou des centres de calcul.

On connaît aussi, des demandes de brevets publiées sous les numéros EP 0 402 833 et US 2001/0022472, une solution consistant à prévoir, outre un premier dispositif d'alimentation principal et un second dispositif d'alimentation de réserve ou de remplacement, un dispositif de secours supplémentaire à stockage d'énergie électrique apte à se décharger pendant la phase de transition entre les premier et second dispositifs d'alimentation en cas de défaillance du premier.

Enfin, la demande de brevet publiée sous le numéro US 2007/0152506 décrit une source de puissance à courant continu primaire convertissant le courant alternatif d'un fournisseur commercial en courant continu. Par ailleurs, il est indiqué qu'en cas de défaillance complète de la source à courant continu primaire, une source à courant continu de renfort à base de piles à combustible est mise en jeu. En outre, des capacités sont prévues en sortie des piles à combustible, afin d'être chargées continûment et de faire le lien entre la source à courant continu primaire et les piles à combustible.

Mais ces solutions apportées par les documents EP 0 402 833, US 2001/0022472 et US 2007/0152506 souffrent d'un problème de fiabilité, l'information de défaillance susceptible de provoquer la phase de transition et l'éventuel démarrage du dispositif de secours provenant de l'alimentation défaillante elle-même.

Il peut donc être souhaité de prévoir un système d'alimentation en courant continu à plusieurs dispositifs d'alimentation qui soit à la fois performant d'un point de vue écologique, c'est-à-dire efficace dans sa consommation d'énergie électrique fournie par le secteur, et fiable lorsqu'une défaillance survient.

L'invention a ainsi pour objet un système d'alimentation en courant continu selon la revendication 1.

En effet, la présence du dispositif de secours permet d'envisager des transitions sans risque d'un dispositif d'alimentation à l'autre lorsque cette transition est réalisée pendant une phase de décharge de ce dispositif de secours. Elle permet donc en fonctionnement normal d'optimiser le fonctionnement de chaque dispositif d'alimentation en courant continu actif tout en maintenant inactif(s) un ou plusieurs autres dispositifs prêts à être démarrés à leur tour en cas de défaillance. En outre, en étant conçu pour recevoir l'information de défaillance, non seulement de l'alimentation défaillante elle-même, mais aussi du dispositif de secours et/ou du système électrique, le module de gestion rend le système d'alimentation particulièrement fiable.

Par ailleurs, en étant placé dans le circuit d'alimentation pour se charger directement à l'aide du courant fourni par les dispositifs d'alimentation en courant continu et se décharger directement vers l'alimentation en courant continu du système électrique, le dispositif de secours proposé présente un encombrement réduit par une meilleure intégration avec le système électrique qu'il est destiné à alimenter temporairement en cas de défaillance.

Le module de gestion est relié, à l'aide d'un bus de transmission de données numériques, aux dispositifs d'alimentation, au dispositif de secours et au système électrique de manière à recevoir et transmettre des données d'information et/ou de commande en provenance et à destination de ces dispositifs d'alimentation, de ce dispositif de secours et de ce système électrique.

De façon optionnelle également, le système électrique comporte un système de traitement d'information à au moins un calculateur alimenté en très basse tension.

De façon optionnelle également, le dispositif de secours comporte :

- des moyens de stockage d'énergie électrique,
- des moyens de charge des moyens de stockage d'énergie électrique à partir d'une partie du courant continu fourni par au moins l'un des dispositifs d'alimentation, et
- des moyens de décharge de l'énergie stockée dans les moyens de stockage d'énergie électrique vers l'alimentation du système électrique, à une tension prédéterminée sensiblement constante.

De façon optionnelle également, les moyens de stockage d'énergie électrique du dispositif de secours comportent au moins un supercondensateur à double couche électrochimique.

De façon optionnelle également, les moyens de stockage d'énergie électrique du dispositif de secours comportent au moins un circuit de supercondensateurs disposés en série.

L'invention a également pour objet un procédé d'alimentation en courant continu d'un système électrique selon la revendication 6.

De façon optionnelle, un procédé d'alimentation selon l'invention peut comprendre les étapes suivantes, suite à la réception par le module de gestion de l'information de défaillance du premier dispositif d'alimentation actif et au démarrage de la phase de décharge du dispositif de secours :

- attente d'une fin éventuelle de la défaillance, pendant une durée au plus égale à une durée maximale de décharge du dispositif de secours permettant d'alimenter le système électrique à une tension prédéterminée sensiblement constante moins une durée de démarrage nécessaire du second dispositif d'alimentation inactif,
- à l'issue de cette attente, si la défaillance perdure, envoi par le module de gestion d'une commande de démarrage du second dispositif d'alimentation.

De façon optionnelle également, la durée de démarrage nécessaire du second dispositif d'alimentation inactif est déterminée comme étant la durée comprise entre l'envoi par le module de gestion d'une commande de démarrage du second dispositif d'alimentation et un instant auquel ce second dispositif d'alimentation est effectivement apte à alimenter le système électrique à ladite tension prédéterminée sensiblement constante.

De façon optionnelle également, un procédé d'alimentation selon l'invention peut comprendre les étapes suivantes, suite à la réception par le module de gestion de l'information de défaillance du premier dispositif d'alimentation actif et au démarrage de la phase de décharge du dispositif de secours, et si le second dispositif d'alimentation inactif est détecté par le module de gestion comme n'étant pas disponible pour remplacer le premier dispositif d'alimentation actif :

- attente d'une fin éventuelle de la défaillance, pendant une durée au plus égale à une durée maximale de décharge du dispositif de secours permettant d'alimenter le système électrique à une tension prédéterminée sensiblement constante moins une durée nécessaire d'arrêt du système électrique,
- à l'issue de cette attente, si la défaillance perdure, envoi par le module de gestion d'une commande d'arrêt du système électrique.

De façon optionnelle également, un procédé d'alimentation selon l'invention peut en outre comprendre, suite à la réception par le module de gestion de l'information de défaillance du premier dispositif d'alimentation actif, une transmission, par le module de gestion au système électrique, d'une commande de passage en mode de consommation réduite de calculateur, notamment en mode de réduction d'une fréquence et d'une tension de fonctionnement de calculateur, lorsque le système électrique comporte un système de traitement d'information à au moins un calculateur alimenté en très basse tension.

L'invention sera mieux comprise à l'aide de la description qui va suivre, donnée uniquement à titre d'exemple et faite en se référant aux dessins annexés dans lesquels :

- la figure 1 représente schématiquement la structure générale d'un système d'alimentation en courant continu d'un système électrique, selon un mode de réalisation de l'invention, et
- la figure 2 illustre les étapes successives d'un procédé mis en oeuvre par un module de gestion du système de la figure 1.

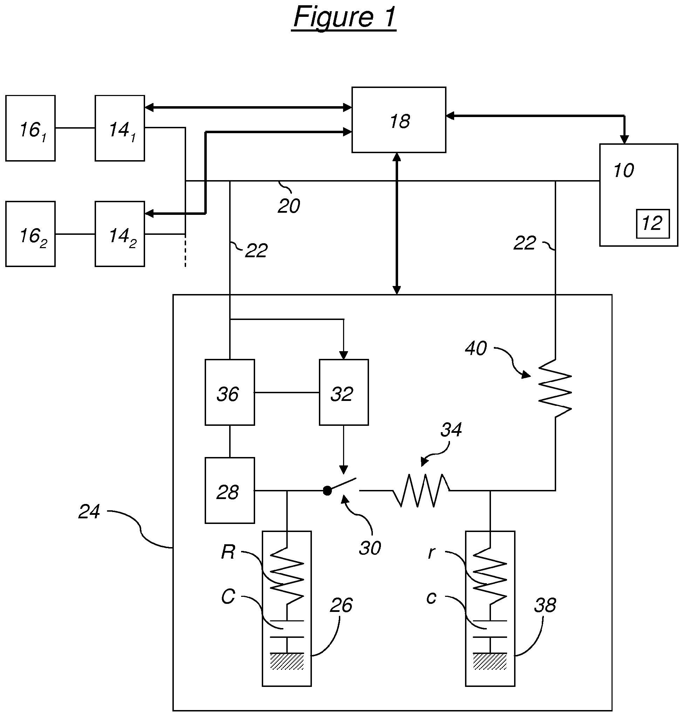

L'installation représentée sur la figure 1 comporte un système électrique 10, par exemple un système de traitement d'information à au moins un calculateur 12. Ce système de traitement d'information 10 est destiné à être alimenté en courant continu, à une intensité qu'il impose en fonction de sa consommation à chaque instant et à une tension prédéterminée sensiblement constante. A titre purement illustratif, le système de traitement d'information 10 est un ensemble de serveurs informatiques formant un calculateur HPC. Il est par exemple conçu pour être alimenté en courant continu maximal de 700 A sous une tension sensiblement constante de 12 V.

Par « sensiblement constante », on entend une tension continue dont les variations sont suffisamment faibles autour de sa valeur de référence (en l'occurrence 12 V dans l'application considérée) pour que le système de traitement d'information 10 puisse les supporter sans dommage pour ses composants de traitement d'information. Etant donné que les systèmes de traitement d'information, par exemple de type calculateurs, sont munis d'un étage de conversion interne qui régule le courant qu'ils consomment en fonction de la tension qu'ils utilisent pour fournir une tension très régulière pouvant descendre jusqu'à moins de 1 V, des variations de 10 à 15 % autour de la valeur de référence de la tension continue dite sensiblement constante fournie en entrée de ces systèmes sont acceptables. Ainsi par exemple, il est acceptable de considérer qu'une tension continue sensiblement constante de 12 V puisse varier entre 11 et 13 V. Une telle tension sensiblement constante est par exemple obtenue par une régulation de la tension continue fournie au système de traitement d'information 10 à l'aide d'une tension seuil maximale et d'une tension seuil minimale de référence.

Le système de traitement d'information 10 est plus précisément alimenté en courant par un système d'alimentation en courant continu comportant au moins deux dispositifs d'alimentation en courant continu $14_1$ et $14_2$, comprenant chacun des moyens de raccordement électrique à une source d'alimentation en courant alternatif $16_1$ ou $16_2$ et un convertisseur AC/DC de courant alternatif en courant continu (non représenté). Plus précisément, dans l'exemple de la figure 1, fourni à titre purement illustratif et non limitatif, le système d'alimentation en courant continu comporte un premier dispositif d'alimentation en courant continu $14_1$ raccordé à une première source d'alimentation en courant alternatif $16_1$ et un second dispositif d'alimentation en courant continu $14_2$ raccordé à une seconde source d'alimentation en courant alternatif $16_2$. Comme indiqué précédemment, une mesure de précaution optionnelle mais avantageuse consiste à prévoir que les sources d'alimentation en courant alternatif $16_1$ et $16_2$ soient différentes. Par ailleurs, plus de deux dispositifs d'alimentation tels que ceux décrits ci-dessus pourraient être prévus. On notera que les sources d'alimentation en courant alternatif $16_1$ et $16_2$ délivrent de façon classique un courant à 50 Hz sous une tension de 230 V. On notera également que, de façon classique, le convertisseur AC/DC de chaque dispositif d'alimentation en courant continu transforme le courant alternatif à 50 Hz sous une tension de 230 V en un courant continu délivré sous une tension de 12 V.

Chacun des deux dispositifs d'alimentation en courant continu $14_1$ et $14_2$ est choisi pour avoir un rendement maximal (en général 92 à 94%) lorsqu'il fournit 700 A sous une tension sensiblement constante de 12 V, c'est-à-dire lorsqu'il fournit ce qui est consommé au maximum par le système de traitement d'information 10. Chaque dispositif d'alimentation en courant continu est donc optimisé pour la consommation attendue du système de traitement d'information 10 en plein régime de fonctionnement.

Le système d'alimentation en courant continu comporte en outre un module 18 de gestion de l'alimentation du système de traitement d'information 10. Un tel module de gestion 18 est relié, à l'aide d'un bus de transmission de données numériques, aux dispositifs d'alimentation $14_1$ et $14_2$ et au système de traitement d'information 10 de manière à recevoir et transmettre des données d'information et/ou de commande en provenance et à destination de ces dispositifs d'alimentation $14_1$ et $14_2$ et de ce système de traitement d'information 10. Le bus de transmission de données n'est pas directement illustré sur la figure 1 mais est fonctionnellement représenté par les doubles flèches en caractères gras symbolisant les échanges de données depuis et vers le module de gestion 18. Il peut s'agir de tout bus de transmission de données adapté dans le contexte de l'application illustrée : par exemple un bus I$^2$C (développé par Philips), SPI (développé par Motorola), JTag (normalisé par IEEE) ou autre.

En pratique le module de gestion 18 peut être de nature logicielle ou matérielle et, s'il est de nature matérielle, peut comporter un matériel de type « hardware » dédié ou puce programmée. Il peut être intégré au système de traitement d'information 10, notamment intégré dans un serveur de contrôle HPC lorsque le système 10 est un calculateur HPC.

Le système de traitement d'information 10, plus particulièrement son alimentation en courant continu, est relié aux dispositifs d'alimentation $14_1$ et $14_2$ à l'aide d'un premier circuit d'alimentation 20.

Un second circuit de dérivation 22 d'une partie du courant continu fourni par l'un ou l'autre des dispositifs d'alimentation $14_1$ et $14_2$ est disposé dans le système d'alimentation parallèlement au premier circuit 20 entre les dispositifs d'alimentation $14_1$ et $14_2$ et le système de traitement d'information 10. Ce second circuit 22 comporte un dispositif 24 de secours à stockage d'énergie électrique apte à alimenter le système de traitement d'information 10 en cas de défaillance dans le circuit 20.

Il permet donc, au dispositif de secours 24, de puiser une partie du courant continu délivré pour le système de traitement d'information 10 par l'un ou l'autre des dispositifs d'alimentation $14_1$ et $14_2$ afin de stocker de l'énergie électrique, et de fournir, en cas de défaillance d'un dispositif d'alimentation actif ou du réseau d'alimentation en courant alternatif (micro-coupure), du courant continu, puisé à partir de l'énergie électrique stockée, au système de traitement d'information 10. En d'autres termes, le dispositif de secours 24 est conçu pour prendre le relais du dispositif d'alimentation actif en cas de défaillance.

Le dispositif de secours 24 comporte des moyens 26 de stockage d'énergie électrique. Ces moyens de stockage 26 peuvent comporter une ou plusieurs batteries classiques. Les batteries d'accumulateurs présentent généralement un bon rapport d'énergie stockée par unité de volume. En revanche, elles présentent un mauvais rapport de puissance crête émise par unité de volume ce qui les rend peu avantageuses pour des applications où le système de traitement d'information 10 est consommateur d'un courant continu de forte intensité. C'est le cas notamment lorsque le système de traitement d'information 10 est un calculateur HPC puisqu'un courant continu de 700 A peut être nécessaire. Dans ce cas, les moyens 26 de stockage d'énergie électrique comportent avantageusement au moins un supercondensateur, de préférence au moins un circuit de supercondensateurs disposés en série, dont le rapport de puissance crête émise par unité de volume est nettement supérieur. Cette puissance crête ne peut cependant pas être émise pendant une durée trop longue, mais c'est largement suffisant pour pallier les micro-coupures d'un réseau d'alimentation en courant alternatif de bonne qualité ou les transitions entre deux dispositifs d'alimentation en courant continu, celles-ci ne dépassant généralement pas quelques centaines de millisecondes.

Les supercondensateurs sont généralement de type EDLC (de l'Anglais « Electrochemical Double Layer Capacitor »), c'est-à-dire conçus selon le procédé de double couche électrochimique. Ils présentent une résistance interne nettement inférieure à celle des batteries. Les moyens 26 de stockage d'énergie électrique à supercondensateurs peuvent être modélisés par un circuit de type RC série (i.e. circuit comportant une résistance et un condensateur en série), relié d'une part à la masse et d'autre part au second circuit 22, de résistance R et de capacité C.

Le dispositif de secours 24 comporte en outre des moyens 28 de charge des moyens 26 de stockage d'énergie électrique à partir d'une partie du courant continu fourni par au moins l'un des dispositifs d'alimentation en courant continu $14_1$ ou $14_2$. Ces moyens de charge 28 sont constitués d'un chargeur de supercondensateurs classique et ne seront donc pas détaillés. Ils permettent de charger les moyens 26 de stockage d'énergie électrique en quelques minutes, en général pas plus de trois minutes, perturbant ainsi assez peu le fonctionnement du système de traitement d'information 10.

Le dispositif de secours 24 comporte aussi des moyens 30, 32 de décharge de l'énergie stockée dans les moyens 26 de stockage d'énergie électrique vers l'alimentation du système de traitement d'information 10, à une intensité donnée (imposée par le système de traitement d'information 10) et une tension prédéterminée sensiblement constante, suite à la détection d'une défaillance (baisse de tension en deçà d'un seuil acceptable) dans le circuit d'alimentation 20.

Ces moyens de décharge comportent un commutateur 30 commandé par un contrôleur 32. Le commutateur 30 comprend par exemple au moins une paire de transistors N-MOS à effet de champ disposés tête-bêche en série. Cette disposition par paire permet d'isoler les supercondensateurs des moyens 26 de stockage d'énergie électrique du système de traitement d'information 10, quelle que soit la tension aux bornes des supercondensateurs et du système de traitement d'information 10. Par ailleurs, si au moment de la décharge le courant destiné à traverser le commutateur 30 est supérieur à ce que peut supporter une telle paire de transistors, plusieurs paires de transistors disposées en parallèle, commandées par le même contrôleur 32, peuvent être prévues pour former le commutateur 30.

Le commutateur 30 est illustré sur la figure 1 par un interrupteur idéal auquel est associée une résistance interne 34. Le contrôleur 32 est, quant à lui, conçu pour pouvoir détecter une défaillance dès que la valeur de la tension fournie au système de traitement d'information 10 devient inférieure à une tension seuil prédéterminée.

Comme indiqué précédemment, le courant continu de 700 A fourni par l'un quelconque des dispositifs d'alimentation en courant continu $14_1$ ou $14_2$ à l'alimentation du système de traitement d'information 10 présente par exemple une tension de 12 V sur le premier circuit d'alimentation 20. Le courant prélevé par le second circuit de dérivation 22 présente donc a priori cette même tension de 12 V. Cependant, pour qu'en cas de défaillance les moyens 26 de stockage d'énergie électrique puissent fournir un courant continu au système de traitement d'information 10 à cette même tension de 12 Volts, il est nécessaire que ceux-ci soient chargés à une tension supérieure, à cause notamment de la résistance interne des moyens 26 de stockage d'énergie électrique et de celle du commutateur 30. Par exemple, cette tension supérieure nécessaire peut être voisine de 15 Volts. En outre, du fait que le commutateur 30 est composé de transistors MOS à effet de champ dont il faut alimenter la grille, le contrôleur 32 doit fournir en général une tension supérieure à 20 Volts.

Pour ces raisons, un rehausseur de tension 36 de type classique est fourni en amont du chargeur 28 et du contrôleur 32 dans le second circuit 22, pour rehausser la tension de 12 V à 21 V par exemple. Selon une autre variante, deux rehausseurs de tension différents pourraient être envisagés, l'un pour le chargeur 28, l'autre pour le contrôleur 32, puisque les tensions dont ils ont besoin ne sont pas les mêmes.

Le dispositif de secours 26 fonctionne de la façon suivante :

- lorsque le système de traitement d'information 10 est alimenté en courant continu par l'un quelconque des dispositifs d'alimentation en courant continu $14_1$ ou $14_2$, une partie de ce courant est détournée par le second circuit 22 pour charger les moyens 26 de stockage d'énergie électrique, tant que ceux-ci ne sont pas encore complètement chargés,
- lorsqu'une défaillance est détectée par le contrôleur 32, celui-ci commande la fermeture du commutateur 30 pour que les moyens 26 de stockage d'énergie électrique prennent le relais du premier circuit d'alimentation 20 défaillant.

Le temps mis par le commutateur 30 pour se fermer et laisser passer le courant provenant des moyens 26 de stockage d'énergie électrique peut cependant être suffisant pour perturber le fonctionnement du système de traitement d'information 10. Le dispositif de secours 24 comporte donc avantageusement des moyens supplémentaires 38 de stockage d'énergie électrique, par exemple constitués de condensateurs simples, dits condensateurs de lissage, disposés en parallèle en sortie du commutateur 30. Les moyens supplémentaires 38 de stockage d'énergie électrique peuvent, comme les moyens de stockage 26 à supercondensateurs, être modélisés par un circuit de type RC série, relié d'une part à la masse et d'autre part au second circuit 22 en sortie du commutateur 30, de résistance r et de capacité c. A titre d'exemple non limitatif, une vingtaine de condensateurs de lissage peuvent être disposés en sortie du commutateur 30, pour une résistance r de 0,5 mΩ et une capacité c de 0,01 F.

Grâce à ces moyens supplémentaires 38 de stockage d'énergie électrique, le dispositif de secours 24 fonctionne plus précisément de la façon suivante :

- lorsque le système de traitement d'information 10 est alimenté en courant continu par l'un quelconque des dispositifs d'alimentation en courant continu $14_1$ ou $14_2$, une partie de ce courant est détournée pendant une durée limitée par le second circuit 22 pour charger les moyens 26 de stockage d'énergie électrique, tant que ceux-ci ne sont pas encore complètement chargés,

- une petite partie de ce courant est également détournée pendant une durée limitée pour charger les moyens supplémentaires 38 de stockage d'énergie électrique tant que ceux-ci ne sont pas encore complètement chargés,
- lorsqu'une défaillance est détectée par le contrôleur 32, celui-ci commande la fermeture du commutateur 30,
- entre le début de la défaillance et la fermeture effective du commutateur 30, une partie de l'énergie électrique accumulée dans les moyens supplémentaires 38 de stockage d'énergie est transmise au système de traitement d'information 10, et
- lorsque le commutateur 30 est effectivement fermé, les moyens 26 de stockage d'énergie électrique prennent le relais du premier circuit d'alimentation 20 défaillant.

On comprendra qu'il n'est pas utile de prévoir des supercondensateurs dans les moyens supplémentaires 38 de stockage d'énergie électrique puisqu'ils ne sont destinés à fournir leur énergie stockée que pendant un très court temps de transition de l'ordre de quelques microsecondes, nettement inférieur à la durée de la défaillance.

Concrètement, le dispositif de secours 24, avec son chargeur 28, son contrôleur 32, son rehausseur de tension 36, son commutateur 30, et ses moyens de stockage 26 et 38, est monté sur une carte formant support et présentant une résistance interne 40 égale par exemple à 0,1 mΩ.

Alors que le système de traitement d'information 10 est alimenté par l'un quelconque des dispositifs d'alimentation en courant continu $14_1$ ou $14_2$ en courant continu de 12 V à partir d'un courant alternatif à 230 V via le premier circuit 20, le second circuit 22 est lui aussi raccordé au premier circuit 20 de sorte qu'il permet une charge du dispositif de secours 24 à l'aide de ce courant continu de 12 V. Cette charge se fait par une consommation de courant continu comprise généralement entre 0,5 et 18 A. Le second circuit 22 permet aussi au contrôleur 32 de prélever la valeur de la tension du courant continu fourni par le premier circuit 20 de manière à pouvoir détecter une éventuelle défaillance, par l'apparition d'une baisse de tension.

Le rehausseur de tension 36, par exemple un convertisseur DC/DC à découpage, rehausse la tension du courant continu fourni par le second circuit 22 en un courant continu à 21 V d'intensité comprise entre 0 et 9 A selon que le dispositif 24 de secours est en situation de charge ou non. Ce courant alimente le contrôleur 32 et le chargeur 28.

Le chargeur 28 fournit à son tour aux moyens 26 de stockage d'énergie électrique un courant continu dont l'intensité varie entre 0 et 12 A selon que le dispositif 24 de secours est en situation de charge ou non.

Il convient de dimensionner les moyens 26 de stockage d'énergie électrique de sorte qu'en situation de décharge, ils puissent fournir un courant de 700 A pendant par exemple au plus 480 ms sous une tension d'environ 12 V toujours au moins supérieure à une limite prédéterminée par exemple fixée à 11 V.

De façon concrète, les moyens 26 de stockage d'énergie électrique comportent au moins un circuit de six supercondensateurs disposés en série. Pour des dimensions acceptables, il est possible de trouver des supercondensateurs dont les caractéristiques sont les suivantes : une capacité égale à 600 F, une résistance interne égale à 0,83 mΩ et une différence de potentiel maximale supportée aux bornes du supercondensateur de 2,7 V. Ainsi, un circuit de six supercondensateurs disposés en série présente une capacité équivalente C = 100 F et une résistance interne équivalente R = 4,98 mΩ. On montre que l'évolution au bout d'un temps T de la tension délivrée par un tel circuit pendant la décharge de ses supercondensateurs vérifie l'équation suivante :

$$V = (\ V_0 - IT\ /\ C\ ) - RI, \qquad\qquad\qquad (1)$$

où $V_0$ est la tension de charge que doit délivrer le chargeur 28, I = 700 A le courant délivré par le circuit, T = 480 ms le temps maximal de décharge.

On voit que, sous ces conditions, pour que la tension V délivrée par le circuit soit toujours supérieure à 11 V, il faut que la tension de charge $V_0$ soit au moins de 17,85 V. Or la différence de potentiel maximale supportée aux bornes des six condensateurs précités est de 6x2,7 V = 16,2 V. Il apparaît donc qu'un seul circuit de six condensateurs ne suffit pas.

En prévoyant deux circuits de six condensateurs tels que ceux précités, disposés en parallèle, on conçoit des moyens 26 de stockage d'énergie électrique dont la capacité équivalente C vaut 200 F et la résistance interne équivalente R vaut 2,49 mΩ. Sous ces nouvelles conditions, pour que la tension V du courant délivré par les moyens 26 de stockage d'énergie électrique soit toujours supérieure à 11 V, il faut que la tension de charge $V_0$ soit au moins de 14,42 V. En pratique, la chute de tension aux bornes du commutateur 30 impose une tension de charge légèrement supérieure, par exemple égale à $V_0$ = 14,8 V. En tenant compte en outre de la résistance interne des moyens 26 de stockage d'énergie électrique, il est ainsi possible pour le second circuit 22 de délivrer un courant de 700 A sous une tension sensiblement constante, c'est-à-dire toujours comprise entre 11 et 13 V, en situation de décharge du dispositif de secours 24, pendant une durée maximale de 480 ms. On notera aussi que des moyens 26 de stockage d'énergie électrique présentant ces paramètres de résistance et capacité équivalentes à l'aide de supercondensateurs peuvent être chargés en moins de trois minutes par le chargeur 28.

La duplication possible voire souhaitable du circuit de six supercondensateurs dans les moyens 26 de stockage d'énergie électrique vient d'être détaillée. Il est également possible, pour des raisons pratiques, de dupliquer le rehausseur de tension 36, le chargeur 28, le contrôleur 32 et le commutateur 30.

Le dispositif de secours 24 décrit ci-dessus est relié lui aussi au module de gestion 18 à l'aide du bus de transmission de données numériques qui relie le module de gestion 18 aux autres éléments de l'installation.

Le module de gestion 18 est ainsi apte à recevoir et émettre des données d'information et/ou de commande en provenance et à destination des dispositifs d'alimentation $14_1$ et $14_2$, du dispositif de secours 24 et du système de traitement d'information 10.

Il est plus précisément apte à recevoir des alertes de défaillance en provenance non seulement d'un dispositif d'alimentation $14_1$ ou $14_2$ actif, mais également du dispositif de secours 24 lorsqu'il a lui-même détecté automatiquement cette défaillance, et/ou en dernier ressort du système de traitement d'information 10. Il est aussi apte à recevoir une information de démarrage de la décharge du dispositif de secours 24 si celui-ci est apte à se décharger automatiquement lorsqu'une défaillance survient.

En outre, il est d'une façon générale programmé pour :

- transmettre des commandes de démarrage de dispositifs d'alimentation inactifs,
- transmettre des commandes d'arrêt de dispositifs d'alimentation actifs,
- transmettre une commande de démarrage du dispositif de secours 24 si celui-ci n'est pas apte à se décharger automatiquement lorsqu'une défaillance survient, et
- transmettre une commande d'arrêt propre du système de traitement d'information 10.

Ainsi, conformément à l'invention, le module de gestion 18 est programmé pour, après réception d'une information de défaillance d'un dispositif d'alimentation $14_1$ ou $14_2$ actif, transmettre une commande de démarrage d'un autre dispositif d'alimentation ($14_2$ ou $14_1$) inactif de manière à activer le démarrage du dispositif d'alimentation inactif pendant une phase de décharge du dispositif de secours 24.

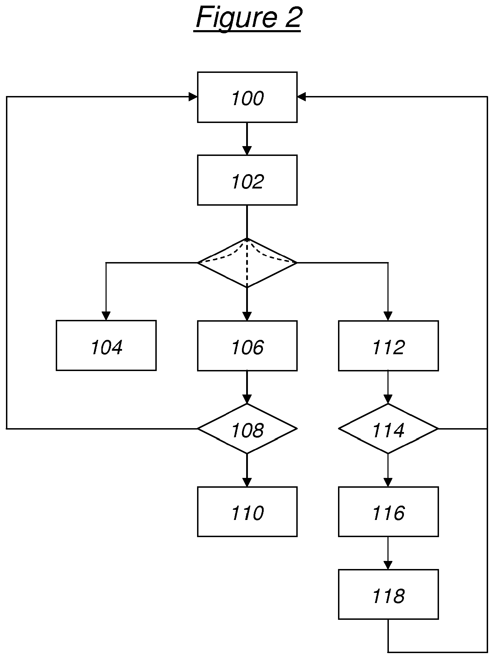

Un fonctionnement possible du module de gestion 18 va maintenant être détaillé en référence à la figure 2.

Au cours d'une première étape 100 de fonctionnement sans événement particulier, le module de gestion 18 reçoit éventuellement des messages d'information des éléments actifs de l'installation, par exemple du système de traitement d'information 10 et du premier dispositif d'alimentation en courant continu $14_1$. Il reçoit en outre des informations de statut des autres éléments tels que le second dispositif d'alimentation en courant continu $14_2$ inactif et le dispositif de secours 24. Ces informations de statut informent par exemple le module de gestion 18 de la disponibilité (i.e. caractère opérationnel) de ces autres éléments en cas de nécessité.

Lors d'une étape 102, une défaillance survient dans l'alimentation du système de traitement d'information 10 et au moins une alerte est transmise au module de gestion 18 de la part, non seulement du dispositif d'alimentation $14_1$ actif, mais également du dispositif de secours 24 lorsqu'il a lui-même détecté automatiquement cette défaillance, et/ou en dernier ressort du système de traitement d'information 10. Cette défaillance peut être due à une coupure plus ou moins longue de la source $16_1$ d'alimentation en courant alternatif ou à une défaillance du dispositif d'alimentation $14_1$ actif lui-même.

Au cours de cette même étape 102, de façon optionnelle et suite à la réception par le module de gestion 18 de l'alerte (i.e. l'information de défaillance du premier dispositif d'alimentation actif $14_1$), une commande de passage en mode de consommation réduite peut être transmise par ce dernier au système de traitement d'information 10. Ce mode de consommation réduite consiste par exemple à réduire la fréquence et la tension de fonctionnement du calculateur 12 lorsque le système 10 comporte au moins un tel calculateur. Notamment, si le calculateur 12 est prévu pour fonctionner à une fréquence de 3 GHz avec un cœur de processeur soumis à une tension de 1,2 V, le mode de consommation réduite peut consister à fonctionner à une fréquence de 800 MHz ou moins avec un cœur de processeur soumis à une tension de 0,8 V ou moins. De cette façon, il est possible de réduire immédiatement la consommation énergétique du système de traitement d'information 10 d'un facteur 3 ou 4.

Ensuite, selon les statuts du second dispositif d'alimentation en courant continu $14_2$ inactif et du dispositif de secours 24, le fonctionnement du module de gestion 18 diffère. On s'oriente vers :

- l'exécution d'une étape 104 si le second dispositif d'alimentation en courant continu $14_2$ et le dispositif de secours 24 sont indisponibles,
- l'exécution d'une succession d'étapes 106, 108 et 110 si le dispositif de secours 24 est disponible mais pas le second dispositif d'alimentation en courant continu $14_2$, ou
- l'exécution d'une succession d'étapes 112, 114, 116 et 118 si le second dispositif d'alimentation en courant continu $14_2$ et le dispositif de secours 24 sont disponibles.

Si le second dispositif d'alimentation en courant continu $14_2$ et le dispositif de secours 24 sont indisponibles, la moindre défaillance, même de courte durée telle qu'une micro-coupure de la source d'alimentation $16_1$, peut avoir de lourdes conséquences sur le fonctionnement du système de traitement d'information 10. Aussi, en cas de défaillance détectée à l'étape 102, on passe dans cette situation à l'étape 104 au cours de laquelle le module de gestion 18 envoie une commande d'arrêt propre du système de traitement d'information 10 pendant la phase de décharge automatique du bloc condensateur « holdup » du premier dispositif d'alimentation en courant continu $14_1$. Par « arrêt propre », on entend un arrêt suivant une séquence prédéterminée rigoureuse d'étapes assurant l'arrêt de tous les processus du système de traitement d'information 10 sans risque d'endommager ce dernier. On suppose que cet arrêt propre est de durée T1 inférieure ou égale à la durée T2 de la décharge automatique du bloc condensateur « holdup ».

Si le dispositif de secours 24 est disponible mais pas le second dispositif d'alimentation en courant continu $14_2$, en cas de défaillance détectée à l'étape 102, on passe dans cette situation à l'étape 106 au cours de laquelle le dispositif de secours 24 entre automatiquement en phase de décharge et en informe éventuellement le module de gestion 18. En variante, si le dispositif de secours 24 n'entre pas automatiquement en phase de décharge, celle-ci peut être provoquée par le module de gestion 18 par émission d'une commande spécifique.

L'étape suivante 108 est une étape d'attente, par le module de gestion 18, d'une reprise de l'alimentation, c'est-à-dire d'une fin de la défaillance. Si l'on note T3 la durée maximale de décharge du dispositif de secours, c'est-à-dire la durée au delà de laquelle il n'est plus apte à fournir un courant continu à la tension souhaitée au système de traitement d'information 10, alors l'étape 108 dure au plus T3-T1.

Si l'alimentation reprend au cours de cette étape, on passe à l'étape 100 (en repassant éventuellement en mode de consommation normale du système de traitement d'information 10 si le mode de consommation réduite a été activé à l'étape 102). Sinon, on passe à l'étape 110 au cours de laquelle le module de gestion 18 envoie une commande d'arrêt propre du système de traitement d'information 10.

Si le second dispositif d'alimentation en courant continu $14_2$ et le dispositif de secours 24 sont disponibles, en cas de défaillance détectée à l'étape 102, on passe dans cette situation à l'étape 112 au cours de laquelle le dispositif de secours 24 entre automatiquement en phase de décharge et en informe éventuellement le module de gestion 18. En variante, si le dispositif de secours 24 n'entre pas automatiquement en phase de décharge, celle-ci peut être provoquée par le module de gestion 18 par émission d'une commande spécifique.

L'étape suivante 114 est une étape d'attente, par le module de gestion 18, d'une reprise de l'alimentation, c'est-à-dire d'une fin de la défaillance. Si l'on note T4 la durée de démarrage du second dispositif d'alimentation en courant continu $14_2$, c'est-à-dire le temps nécessaire pour que ce dernier soit apte à fournir un courant continu à la tension souhaitée au système de traitement d'information 10 après transmission par le module de gestion 18 d'une commande de démarrage, alors l'étape 114 dure au plus T3-T4.

Si l'alimentation reprend au cours de cette étape, on passe à l'étape 100 (en repassant éventuellement en mode de consommation normale du système de traitement d'information 10 si le mode de consommation réduite a été activé à l'étape 102). Sinon, on passe à l'étape 116 au cours de laquelle le module de gestion 18 envoie une commande de démarrage du second dispositif d'alimentation en courant continu $14_2$.

De façon pratique et à titre d'exemple purement illustratif, on peut avoir les valeurs suivantes pour T1, T2, T3 et T4 :

- T1 = T2 = 20 ms,
- T3 = 480 ms,
- T4 = 100 ms.

De façon optionnelle, si le premier dispositif d'alimentation en courant continu $14_1$ ne s'est pas arrêté de lui-même, à cause de la défaillance par exemple, on passe à une étape 118 au cours de laquelle le module de gestion 18 envoie une commande d'arrêt du premier dispositif d'alimentation en courant continu $14_1$. La cause de la défaillance peut alors être traitée par un opérateur.

Enfin, l'étape 118 est suivie d'un retour à l'étape 100 (en repassant éventuellement en mode de consommation normale du système de traitement d'information 10 si le mode de consommation réduite a été activé à l'étape 102), à la différence près que c'est maintenant le second dispositif d'alimentation en courant continu $14_2$ qui est actif et le premier dispositif d'alimentation en courant continu $14_1$ qui est inactif. Au début de cette étape 100 également, le dispositif de secours 24 se recharge pour être de nouveau disponible en cas de future défaillance.

Il apparaît clairement qu'un système d'alimentation en courant continu tel que celui décrit précédemment permet d'améliorer le rendement des dispositifs d'alimentation en courant continu en permettant de les faire fonctionner au mieux de leur efficacité sans pour autant prendre de risque en cas de survenance d'une défaillance. Ce système d'alimentation est ainsi facilement rendu conforme aux exigences environnementales des nouvelles et futures normes qui s'imposent.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué, l'invention est seulement définie par les revendications annexées.

**Revendications**

1. Système d'alimentation en courant continu d'un système électrique (10), comportant:

   - au moins deux dispositifs ($14_1$, $14_2$) d'alimentation en courant continu, comprenant chacun des moyens de raccordement électrique à une source ($16_1$, $16_2$) d'alimentation en courant alternatif et un convertisseur AC/DC de courant alternatif en courant continu,
   - un module (18) de gestion de l'alimentation du système électrique (10) conçu matériellement ou programmé pour, après réception d'une information de défaillance d'un premier dispositif d'alimentation actif ($14_1$) parmi lesdits au moins deux dispositifs d'alimentation ($14_1$, $14_2$), transmettre une commande de démarrage d'un second dispositif d'alimentation inactif ($14_2$) parmi lesdits au moins deux dispositifs d'alimentation ($14_1$, $14_2$), et
   - un dispositif (24) de secours à stockage d'énergie électrique raccordé électriquement en dérivation entre lesdits au moins deux dispositifs d'alimentation ($14_1$, $14_2$) d'une part et le système électrique (10) d'autre part,

   le module de gestion (18) étant conçu matériellement ou programmé pour transmettre la commande de démarrage du second dispositif d'alimentation ($14_2$) pendant une phase de décharge du dispositif de secours (24), le module de gestion (18) étant relié, à l'aide d'un bus de transmission de données numériques, aux deux dispositifs d'alimentation ($14_1$, $14_2$), au dispositif de secours (24) et au système électrique (10) de manière à recevoir et transmettre des données d'information et/ou de commande en provenance et à destination de ces deux dispositifs d'alimentation, de ce dispositif de secours (24) et de ce système électrique (10), **caractérisé en ce que** le module de gestion (18) est en outre conçu matériellement ou programmé pour recevoir ladite information de défaillance dudit premier dispositif d'alimentation actif ($14_1$) en provenance du dispositif de secours (24) et/ou du système électrique (10).

2. Système d'alimentation selon la revendication 1, dans lequel le module de gestion (18) est conçu matériellement ou programmé pour :

   - transmettre une commande de démarrage du second dispositif d'alimentation inactif ($14_2$),
   - transmettre une commande d'arrêt du premier dispositif d'alimentation actif ($14_1$),
   - transmettre une commande de démarrage du dispositif de secours (24) si celui-ci n'est pas apte à se décharger automatiquement lorsqu'une défaillance survient, et
   - transmettre une commande d'arrêt propre du système électrique (10).

3. Système d'alimentation selon l'une quelconque des revendications 1 et 2, dans lequel le système électrique (10) comporte un système de traitement d'information à au moins un calculateur (12) alimenté en tension continue inférieure à 120 V.

4. Système d'alimentation selon l'une quelconque des revendications 1 à 3, dans lequel le dispositif de secours (24) comporte :

   - des moyens (26) de stockage d'énergie électrique,
   - des moyens (28) de charge des moyens (26) de stockage d'énergie électrique à partir d'une partie du courant continu fourni par au moins l'un des dispositifs d'alimentation ($14_1$, $14_2$), et
   - des moyens (30, 32) de décharge de l'énergie stockée dans les moyens (26) de stockage d'énergie électrique vers l'alimentation du système électrique (10), à une tension continue dont les variations restent inférieures de 10 à 15% autour d'une valeur de référence.

5. Système d'alimentation selon la revendication 4, dans lequel les moyens (26) de stockage d'énergie électrique du dispositif de secours (24) comportent au moins un supercondensateur à double couche électrochimique.

6. Procédé d'alimentation en courant continu d'un système électrique (10), à l'aide :

   - d'au moins deux dispositifs ($14_1$, $14_2$) d'alimentation en courant continu, comprenant chacun des moyens de raccordement électrique à une source ($16_1$, $16_2$) d'alimentation en courant alternatif et un convertisseur AC/DC de courant alternatif en courant continu,

- d'un module (18) de gestion de l'alimentation du système électrique (10) conçu pour, après réception d'une information de défaillance d'un premier dispositif d'alimentation actif (14$_1$) parmi lesdits au moins deux dispositifs d'alimentation (14$_1$, 14$_2$), transmettre une commande de démarrage d'un second dispositif d'alimentation inactif (14$_2$) parmi lesdits au moins deux dispositifs d'alimentation (14$_1$, 14$_2$), et

- d'un dispositif (24) de secours à stockage d'énergie électrique raccordé électriquement en dérivation entre lesdits au moins deux dispositifs d'alimentation (14$_1$, 14$_2$) d'une part et le système électrique (10) d'autre part,

dans lequel la commande de démarrage du second dispositif d'alimentation (14$_2$) est transmise (116) par le module de gestion (18) pendant une phase de décharge du dispositif de secours (24), le module de gestion (18) étant relié, à l'aide d'un bus de transmission de données numériques, aux deux dispositifs d'alimentation (14$_1$, 14$_2$), au dispositif de secours (24) et au système électrique (10) de manière à recevoir et transmettre des données d'information et/ou de commande en provenance et à destination de ces deux dispositifs d'alimentation (14$_1$, 14$_2$), de ce dispositif de secours (24) et de ce système électrique (10), le procédé étant **caractérisé en ce que** le module de gestion (18) reçoit l'information de défaillance dudit premier dispositif d'alimentation actif (14$_1$) en provenance du dispositif de secours (24) et/ou du système électrique (10).

7. Procédé d'alimentation selon la revendication 6, comprenant les étapes suivantes, suite à la réception (102) par le module de gestion (18) de l'information de défaillance du premier dispositif d'alimentation actif (14$_1$) et au démarrage (112) de la phase de décharge du dispositif de secours (24) :

- attente (114) d'une fin éventuelle de la défaillance, pendant une durée au plus égale à une durée maximale de décharge du dispositif de secours permettant d'alimenter le système électrique à une tension continue dont les variations restent inférieures de 10 à 15% autour d'une valeur de référence moins une durée de démarrage nécessaire du second dispositif d'alimentation inactif,
- à l'issue de cette attente, si la défaillance perdure, envoi (116) par le module de gestion d'une commande de démarrage du second dispositif d'alimentation (14$_2$).

8. Procédé d'alimentation selon la revendication 7, dans lequel la durée de démarrage nécessaire du second dispositif d'alimentation inactif (14$_2$) est déterminée comme étant la durée comprise entre l'envoi (116) par le module de gestion (18) d'une commande de démarrage du second dispositif d'alimentation (14$_2$) et un instant auquel ce second dispositif d'alimentation est effectivement apte à alimenter le système électrique (10) à ladite tension continue dont les variations restent inférieures de 10 à 15% autour de ladite valeur de référence.

9. Procédé d'alimentation selon l'une quelconque des revendications 6 à 8, comprenant les étapes suivantes, suite à la réception (102) par le module de gestion (18) de l'information de défaillance du premier dispositif d'alimentation actif (14$_1$) et au démarrage (106) de la phase de décharge du dispositif de secours (24), et si le second dispositif d'alimentation inactif (14$_2$) est détecté par le module de gestion (18) comme n'étant pas disponible pour remplacer le premier dispositif d'alimentation actif (14$_1$) :

- attente (108) d'une fin éventuelle de la défaillance, pendant une durée au plus égale à une durée maximale de décharge du dispositif de secours (24) permettant d'alimenter le système électrique (10) à une tension continue dont les variations restent inférieures de 10 à 15% autour d'une valeur de référence moins une durée nécessaire d'arrêt du système électrique,
- à l'issue de cette attente, si la défaillance perdure, envoi (110) par le module de gestion (18) d'une commande d'arrêt du système électrique (10).

10. Procédé d'alimentation selon l'une quelconque des revendications 6 à 9, comprenant en outre, suite à la réception (102) par le module de gestion (18) de l'information de défaillance du premier dispositif d'alimentation actif (14$_1$), une transmission, par le module de gestion (18) au système électrique (10), d'une commande de passage en mode de consommation réduite de calculateur (12), notamment en mode de réduction d'une fréquence et d'une tension de fonctionnement de calculateur (12), lorsque le système électrique (10) comporte un système de traitement d'information à au moins un calculateur (12) alimenté en tension continue inférieure à 120 V.

**Patentansprüche**

1. Gleichstromversorgungssystem eines elektrischen Systems (10), umfassend:

- mindestens zwei Gleichstromversorgungsvorrichtungen ($14_1$, $14_2$), die jeweils Mittel zur elektrischen Verbindung mit einer Wechselstromversorgungsquelle ($16_1$, $16_2$) und einen AC/DC-Wandler von Wechselstrom zu Gleichstrom beinhalten,
- ein Modul (18) zur Verwaltung der Versorgung des elektrischen Systems (10), das materiell ausgelegt oder programmiert ist, um, nach Empfang einer Störfallinformation einer ersten aktiven Versorgungsvorrichtung ($14_1$) unter den mindestens zwei Versorgungsvorrichtungen ($14_1$, $14_2$), einen Befehl zum Starten einer zweiten inaktiven Versorgungsvorrichtung ($14_2$) unter den mindestens zwei Versorgungsvorrichtungen ($14_1$, $14_2$) zu übertragen, und
- eine Sicherungsvorrichtung (24) zur Speicherung von elektrischer Energie, die elektrisch im Bypass zwischen den mindestens zwei Versorgungsvorrichtungen ($14_1$, $14_2$) einerseits und dem elektrischen System (10) andererseits verbunden ist,

wobei das Verwaltungsmodul (18) materiell ausgelegt oder programmiert ist, um den Befehl zum Starten der zweiten Versorgungsvorrichtung ($14_2$) während einer Entladephase der Sicherungsvorrichtung (24) zu übertragen, wobei das Verwaltungsmodul (18) mit Hilfe eines Busses zur Übertragung digitaler Daten mit den zwei Versorgungsvorrichtungen ($14_1$, $14_2$), mit der Sicherungsvorrichtung (24) und mit dem elektrischen System (10) auf eine Weise verbunden ist, um Informations- und/oder Befehlsdaten von diesen zwei Versorgungsvorrichtungen, dieser Sicherungsvorrichtung (24) und diesem elektrischen System (10) zu empfangen und zu übertragen, **dadurch gekennzeichnet, dass** das Verwaltungsmodul (18) ferner materiell ausgelegt oder programmiert ist, um die Störfallinformationen der ersten aktiven Versorgungsvorrichtung ($14_1$) von der Sicherungsvorrichtung (24) und/oder dem elektrischen System (10) zu empfangen.

2. Versorgungssystem nach Anspruch 1, wobei das Verwaltungsmodul (18) materiell ausgelegt oder programmiert ist zum:

- Übertragen eines Befehls zum Starten der zweiten inaktiven Versorgungsvorrichtung ($14_2$),
- Übertragen eines Befehls zum Ausschalten der ersten aktiven Versorgungsvorrichtung ($14_1$),
- Übertragen eines Befehls zum Starten der Sicherungsvorrichtung (24), wenn diese nicht in der Lage ist, sich bei Auftreten eines Störfalls automatisch zu entladen, und
- Übertragen eines dem elektrischen System (10) eigenen Befehls zum Ausschalten.

3. Versorgungssystem nach einem der Ansprüche 1 und 2, wobei das elektrische System (10) ein Informationsverarbeitungssystem mit mindestens einem Rechner (12) umfasst, der mit einer Gleichspannung von weniger als 120 V versorgt wird.

4. Versorgungssystem nach einem der Ansprüche 1 bis 3, wobei die Sicherungsvorrichtung (24) umfasst:

- Mittel (26) zum Speichern von elektrischer Energie,
- Mittel (28) zum Laden der Mittel (26) zum Speichern von elektrischer Energie ausgehend von einem Teil des Gleichstroms, der von mindestens einer der Versorgungsvorrichtungen ($14_1$, $14_2$) bereitgestellt wird, und
- Mittel (30, 32) zum Entladen der in den Mitteln (26) zum Speichern von elektrischer Energie gespeicherten Energie an die Versorgung des elektrischen Systems (10), bei einer Gleichspannung, deren Schwankungen unter 10 bis 15 % um einen Referenzwert herum bleiben.

5. Versorgungssystem nach Anspruch 4, wobei die Mittel (26) zum Speichern von elektrischer Energie der Sicherungsvorrichtung (24) mindestens einen elektrochemischen Doppelschicht-Superkondensator umfassen.

6. Verfahren zur Gleichstromversorgung eines elektrischen Systems (10), mit Hilfe von:

- mindestens zwei Gleichstromversorgungsvorrichtungen ($14_1$, $14_2$), die jeweils Mittel zur elektrischen Verbindung mit einer Wechselstromversorgungsquelle ($16_1$, $16_2$) und einen AC/DC-Wandler von Wechselstrom zu Gleichstrom beinhalten,
- einem Modul (18) zur Verwaltung der Versorgung des elektrischen Systems (10), das ausgelegt ist, um nach Empfang einer Störfallinformation einer ersten aktiven Versorgungsvorrichtung ($14_1$) unter den mindestens zwei Versorgungsvorrichtungen ($14_1$, $14_2$), einen Befehl zum Starten einer zweiten inaktiven Versorgungsvorrichtung ($14_2$) unter den mindestens zwei Versorgungsvorrichtungen ($14_1$, $14_2$) zu übertragen, und
- einer Sicherungsvorrichtung (24) zur Speicherung von elektrischer Energie, die elektrisch im Bypass zwischen den mindestens zwei Versorgungsvorrichtungen ($14_1$, $14_2$) einerseits und dem elektrischen System (10) andererseits verbunden ist,

wobei der Befehl zum Starten der zweiten Versorgungsvorrichtung ($14_2$) während einer Entladephase der Sicherungsvorrichtung (24) durch das Verwaltungsmodul (18) übertragen (116) wird, wobei das Verwaltungsmodul (18), mit Hilfe von einem Bus zur Übertragung digitaler Daten, mit den zwei Versorgungsvorrichtungen ($14_1$, $14_2$), der Sicherungsvorrichtung (24) und dem elektrischen System (10) auf eine Weise verbunden ist, um Informations- und/oder Befehlsdaten von diesen zwei Versorgungsvorrichtungen ($14_1$, $14_2$), dieser Sicherungsvorrichtung (24) und diesem elektrischen System (10) zu empfangen und an diese zu übertragen, wobei das Verfahren **dadurch gekennzeichnet ist, dass** das Verwaltungsmodul (18) die Störfallinformationen der ersten aktiven Versorgungsvorrichtung ($14_1$) von der Sicherungsvorrichtung (24) und/oder dem elektrischen System (10) empfängt.

7. Versorgungsverfahren nach Anspruch 6, beinhaltend die folgenden Schritte nach dem Empfang (102) der Störfallinformationen der ersten aktiven Versorgungsvorrichtung ($14_1$) durch das Verwaltungsmodul (18) und dem Start (112) der Entladephase der Sicherungsvorrichtung (24):

   - Warten (114) auf ein mögliches Ende des Störfalls, während eines Zeitraums, der höchstens gleich einer maximalen Entladedauer der Sicherungsvorrichtung ist, die es erlaubt, das elektrische System mit einer Gleichspannung zu versorgen, deren Schwankungen unter 10 bis 15% um einen Referenzwert herum bleiben, abzüglich einer notwendigen Startdauer der zweiten inaktiven Versorgungsvorrichtung,
   - am Ende dieses Wartens, wenn der Störfall weiterhin besteht, Senden (116) eines Befehls zum Starten der zweiten Versorgungsvorrichtung ($14_2$) durch das Verwaltungsmodul.

8. Versorgungsverfahren nach Anspruch 7, wobei die erforderliche Startdauer der inaktiven zweiten Versorgungsvorrichtung ($14_2$) als die Dauer zwischen dem Senden (116) eines Befehls zum Starten der zweiten Versorgungsvorrichtung ($14_2$) durch das Verwaltungsmodul (18) und einem Zeitpunkt bestimmt wird, zu dem diese zweite Versorgungsvorrichtung tatsächlich in der Lage ist, das elektrische System (10) mit der Gleichspannung zu versorgen, deren Schwankungen unter 10 bis 15% um den Referenzwert herum bleiben.

9. Versorgungsverfahren nach einem der Ansprüche 6 bis 8, beinhaltend die folgenden Schritte, nach dem Empfang (102) der Störfallinformationen der ersten aktiven Versorgungsvorrichtung ($14_1$) durch das Verwaltungsmodul (18) und dem Start (106) der Entladephase der Sicherungsvorrichtung (24), und wenn die zweite inaktive Versorgungsvorrichtung ($14_2$) von dem Verwaltungsmodul (18) als nicht verfügbar erkannt wird, um die erste aktive Versorgungsvorrichtung ($14_1$) zu ersetzen:

   - Warten (108) auf ein mögliches Ende des Störfalls, während eines Zeitraums, der höchstens gleich einer maximalen Entladedauer der Sicherungsvorrichtung (24) ist, die es erlaubt, das elektrische System (10) mit einer Gleichspannung zu versorgen, deren Schwankungen unter 10 bis 15% um einen Referenzwert herum bleiben, abzüglich einer notwendigen Ausschaltdauer des elektrischen Systems,
   - am Ende dieses Wartens, wenn der Störfall weiterhin besteht, Senden (110) eines Befehls zum Ausschalten des elektrischen Systems (10) durch das Verwaltungsmodul (18).

10. Versorgungsverfahren nach einem der Ansprüche 6 bis 9, ferner beinhaltend, nach dem Empfang (102) der Störfallinformationen der ersten aktiven Versorgungsvorrichtung ($14_1$) durch das Verwaltungsmodul (18), eine Übertragung, durch das Verwaltungsmodul (18) an das elektrische System (10), eines Befehls zum Umschalten in einen Modus mit reduziertem Verbrauch des Rechners (12), insbesondere in einen Modus zur Reduzierung einer Betriebsfrequenz und einer Betriebsspannung des Rechners (12), wenn das elektrische System (10) ein Informationsverarbeitungssystem mit mindestens einem Rechner (12) umfasst, der mit einer Gleichspannung von weniger als 120 V versorgt wird.

## Claims

1. A system for supplying DC power to an electrical system (10), comprising:

   - at least two devices ($14_1$, $14_2$) for supplying DC power, each comprising means for electrical connection to a source ($16_1$, $16_2$) for supplying AC power and an AC/DC converter for converting AC power into DC power,
   - a module (18) for managing the power supply of the electrical system (10) physically designed or programmed to, after receiving information of a failure of a first active power supply device ($14_1$) of said at least two power

supply devices ($14_1$, $14_2$), transmit a command to start up a second inactive power supply device ($14_2$) of said at least two power supply devices ($14_1$, $14_2$), and

- a backup device (24) for storing electric energy connected electrically in bypass between said at least two power supply devices ($14_1$, $14_2$) on the one hand and the electrical system (10) on the other hand,

the management module (18) being physically designed or programmed to transmit the command to start up the second power supply device ($14_2$) during a discharge phase of the backup device (24), the management module (18) being connected, by means of a digital data transmission bus to the two power supply devices ($14_1$, $14_2$), to the backup device (24) and to the electrical system (10) so as to receive and transmit information and/or control data coming from and directed to these two power supply devices, to this backup device (24) and to this electrical system (10), **characterized in that** the management module (18) is further physically designed or programmed to receive said information of a failure of said first active power supply device ($14_1$) from the backup device (24) and/or from the electrical system (10).

2. The power supply system according to claim 1, wherein the management module (18) is physically designed or programmed to:

- transmit a command to start up the second inactive power supply device ($14_2$),
- transmit a command to shut down the first active power supply device ($14_1$),
- transmit a command to start up the backup device (24) if the latter is not able to discharge automatically when a failure occurs, and
- transmit a specific command to shut down the electrical system (10).

3. The power supply system according to any one of claims 1 and 2, wherein the electrical system (10) comprises an information processing system having at least one calculator (12) supplied with a DC voltage of less than 120 V.

4. The power supply system according to any one of claims 1 to 3, wherein the backup device (24) comprises:

- means (26) for storing electric energy,
- means (28) for charging the means (26) for storing electric energy from a portion of the DC power provided by at least one of the power supply devices ($14_1$, $14_2$), and
- means (30, 32) for discharging the energy stored in the means (26) for storing electric energy to the power supply of the electrical system (10), at a DC voltage whose variations remain less than 10 to 15% around a reference value.

5. The power supply system according to claim 4, wherein the means (26) for storing electric energy of the backup device (24) comprise at least one electrochemical double layer supercapacitor.

6. A method for supplying DC power to an electrical system (10), by means of:

- at least two devices ($14_1$, $14_2$) for supplying DC power, each comprising means for electrical connection to a source ($16_1$, $16_2$) for supplying AC power and an AC/DC converter for converting AC power into DC power,
- a module (18) for managing the power supply of the electrical system (10) designed to, after receiving information of a failure of a first active power supply device ($14_1$) of said at least two power supply devices ($14_1$, $14_2$), transmit a command to start up a second inactive power supply device ($14_2$) of said at least two power supply devices ($14_1$, $14_2$), and
- a backup device (24) for storing electric energy connected electrically in bypass between said at least two power supply devices ($14_1$, $14_2$) on the one hand and the electrical system (10) on the other hand,

wherein the command to start up the second power supply device ($14_2$) is transmitted (116) by the management module (18) during a discharge phase of the backup device (24), the management module (18) being connected, by means of a digital data transmission bus, to the two power supply devices ($14_1$, $14_2$), to the backup device (24) and to the electrical system (10) so as to receive and transmit information and/or control data coming from and directed to these two power supply devices ($14_1$, $14_2$), this backup device (24) and this electrical system (10), the method being **characterized in that** the management module (18) receives the information of a failure of said first active power supply device ($14_1$) from the backup device (24) and/or from the electrical system (10).

7. The power supply method according to claim 6, comprising the following steps, following the receipt (102) by the management module (18) of the information of a failure of the first active power supply device ($14_1$) and the start (112) of the discharge phase of the backup device (24):

- waiting (114) for a possible end of the failure, for a period of time at most equal to a maximum discharge time of the backup device enabling to supply the electrical system at a DC voltage whose variations remain less than 10 to 15% around a reference value minus a necessary start-up time of the second inactive power supply device,
- at the end of this waiting period, if the failure persists, sending (116) by the management module a command to start up the second power supply device ($14_2$).

8. The power supply method according to claim 7, wherein the necessary start-up time of the second inactive power supply device ($14_2$) is determined as being the time comprised between the sending (116) by the management module (18) of a command to start up the second power supply device ($14_2$) and an instant at which this second power supply device is effectively able to supply the electrical system (10) at said DC voltage whose variations remain less than 10 to 15% around said reference value.

9. The power supply method according to any one of claims 6 to 8, comprising the following steps, following the receipt (102) by the management module (18) of the information of a failure of the first active power supply device ($14_1$) and the start (106) of the discharge phase of the backup device (24), and if the second inactive power supply device ($14_2$) is detected by the management module (18) as not being available to replace the first active power supply device ($14_1$):

- waiting (108) for a possible end of the failure, for a period of time at most equal to a maximum discharge time of the backup device (24) enabling to supply the electrical system (10) at a DC voltage whose variations remain less than 10 to 15% around a reference value minus a necessary shut-down time of the electrical system,
- at the end of this waiting period, if the failure persists, sending (110) by the management module (18) a command to shut down the electrical system (10).

10. The power supply method according to any one of claims 6 to 9, further comprising, following the receipt (102) by the management module (18) of the information of a failure of the first active power supply device ($14_1$), a transmission, by the management module (18) to the electrical system (10), of a command to switch to low-consumption mode for the calculator (12), in particular to a mode for reducing an operating frequency and voltage of the calculator (12), when the electrical system (10) comprises an information processing system having at least one calculator (12) supplied with a DC voltage of less than 120 V.

Figure 1

## _Figure 2_

## RÉFÉRENCES CITÉES DANS LA DESCRIPTION

**Documents brevets cités dans la description**

- EP 0402833 A
- US 20010022472 A
- US 20070152506 A